# EUROPEAN PATENT APPLICATION

(11) **EP 2 610 796 A1**
(43) Date of publication of application: **03.07.2013**
(21) Application number: 12199452.9
(22) Date of filing: 27.12.2012
(51) Int. Cl.: G06Q 10/10, G06Q 10/06

(54) **Managing a project during transition**

(30) Priority: 29.12.2011 IN MU36942011
(71) Applicant: Tata Consultancy Services Limited, Maharashtra (IN)
(72) Inventor: Raman, Venkatarama Kothanda, 400079 Mumbai (IN)
(74) Representative: Meissner, Bolte & Partner

(57) **Abstract**

A method and a system (**100**) for managing a project during transition are provided. The system (**100**) comprises a processor (**102**), an interface (**104**), and a memory (**106**) coupled to the processor (**102**). The system (**100**) receives a request for initiating the project through the interface (**104**). The memory (**106**) comprises a back end module (**112**) and a front end module (**114**). The back end module (**112**) is configured to create a standard project workspace and a standard project plan upon receiving the request to initiating the project. The front end module (**114**) is configured to generate in real time one or more status reports of the project for various stakeholders. These status reports are based on the standard project plan.

## Description

### TECHNICAL FIELD

The present subject matter described herein, in general, relates to project management, and more particularly to systems and methods for managing a project during transition.

### BACKGROUND

Typically, projects, such as IT projects, are completed in stages. Every such project, thus, undergoes transition from one stage to another stage. When project managers manually track the progress of a project during transitions and otherwise also, the success of the project is dependent primarily on the ability of the project managers to successfully drive the project and achieve intended result. This manual approach results in low repeatability of successful transitions and, in varying quality of projects when projects are managed by different project managers.

### SUMMARY

This summary is provided to introduce concepts related to systems and methods for managing a project during transition and the concepts are further described below in the detailed description. This summary is not intended to identify essential features of the claimed subject matter nor is it intended for use in determining or limiting the scope of the claimed subject matter.

In one embodiment of the present subject matter, a system for managing a project during transition is provided. The system comprises a processor, an interface, and a memory coupled to the processor. The system receives a request for initiating the project through the interface. The memory comprises a back end module and a front end module. The back end module is configured to create a standard project workspace and a standard project plan upon receiving the request for initiating the project. The front end module is configured to generate in real time one or more status reports of the project for various stakeholders. These status reports are based on the standard project plan.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

**Fig. 1** illustrates a network implementation of a system for managing a project during transition, in accordance with an embodiment of the present subject matter.

**Fig. 2** illustrates a schematic project plan, in accordance with an embodiment of the present subject matter.

**Fig. 3** illustrates a method for managing a project during transition, in accordance with an embodiment of the present subject matter.

### DETAILED DESCRIPTION

Systems and methods for managing a project during transition are described herein. For handling large projects, organizations these days have a transition team and transition managers to manage project transitions from one stage of the project to another stage. Usually, transition managers maintain a project plan and project documentation for each of the project being executed. Such project plan and project documentation are usually in a non-standard form, thereby increasing the risk of some of various checkpoints and deliverables to be missed during the execution of the project which directly impacts project success.

Further, when several concurrent projects are being executed across the globe, leadership at delivery site generally do not get sufficient visibility to the project progress status. Moreover, leadership at client site also does not get sufficient visibility to the project progress status at delivery site. More importantly, issues in project execution, for example, delay in transition timeline, incomplete documentation, inadequate review, and document sign-off, are often visible only at the end of transition or when the project is completed. This gives very short lead time to take any corrective action and, thus, has a direct impact on service commitment and customer satisfaction.

Furthermore, since the project documents may be maintained in transition manager's local system and may not be available to all stakeholders involved in the project, any miss in hand-off to the concerned stakeholder, such as the client, may results in non-availability of the project documents for any future reference or learning.

The present subject matter describes systems and methods for managing a project during transition from one stage to another stage of the project in a well defined and structured way. In one embodiment, the system for managing a project during transition, upon receiving a request for project initiation, creates a standard project workspace and a standard project plan. The standard project workspace is used to store the project documents and the standard project plan lists various activities and deliverables for each stage of the project. For a project to transition from one stage to next stage, a tollgate has to be signed off. The tollgate provides a checklist of activities and deliverables for moving on to the next stage. Every transition of the project from one stage to next stage may be monitored on the basis of real time status reports of the project generated for various stakeholders. These status reports are based on the standard project plan. Therefore, the system can assist in managing transition from one stage to the next stage. Further, the system can enable workflow and document management. Further, the system provides more visibility to project status on real-time basis for various stakeholders, such as a client and a project manager.

While aspects of described systems and methods for managing a project during transition may be implemented in any number of different computing systems, environments, and/or configurations, the embodiments are described in the context of the following exemplary systems.

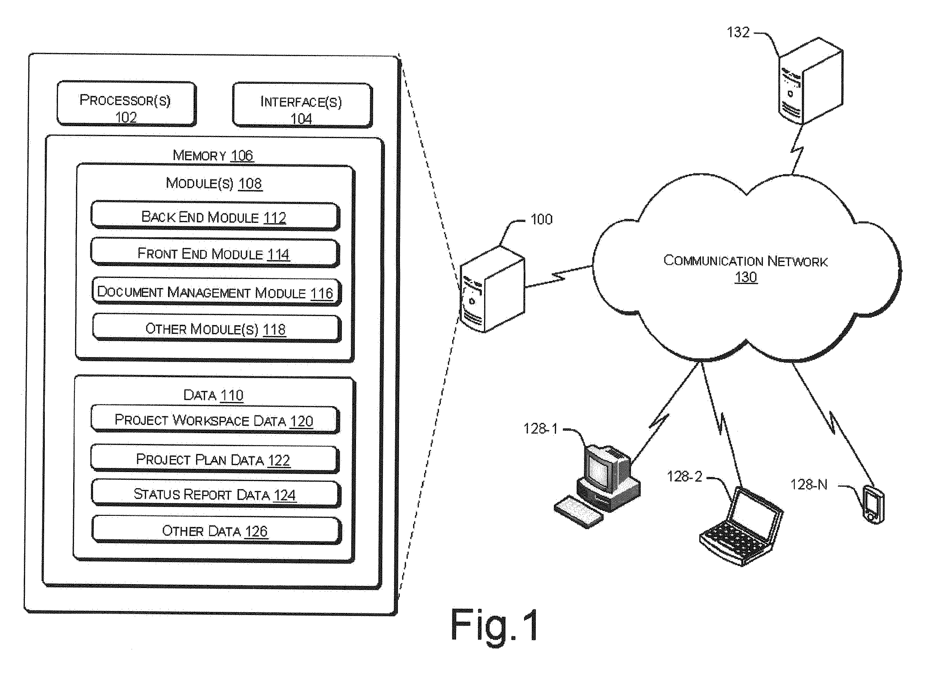

Referring now to **Fig. 1**, a network implementation of a system **100** for managing a project during transition is illustrated, in accordance with an embodiment of the present subject matter. The system **100** may be implemented in a variety of computing systems, such as a laptop computer, a desktop computer, a notebook, a workstation, a mainframe computer, a server, and a network server. The system **100** includes at least one processor **102,** an I/O interface **104,** and a memory **106.** The at least one processor **102** may be implemented as one or more microprocessors, microcomputers, microcontrollers, digital signal processors, central processing units, state machines, logic circuitries, and/or any devices that manipulate signals based on operational instructions. Among other capabilities, the at least one processor **102** is configured to fetch and execute computer-readable instructions stored in the memory **106.**

The I/O interface **104** includes a variety of software and hardware interfaces, for example, a web interface, a graphical user interface, and the like. The I/O interface **104** allows the system **100** to interact with a user. Further, the I/O interface **104** enables the system **100** to communicate with other computing devices, such as web servers and external data servers (not shown). Further, the I/O interface **104** facilitates multiple communications within a wide variety of networks and protocol types, including wired networks, for example, LAN, cable, etc., and wireless networks, such as WLAN, cellular, or satellite. The I/O interface **104** includes one or more ports for connecting a number of devices to one another or to another server.

The memory **106** may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory **106** may include modules **108** and data **110.**

The modules **108** include routines, programs, objects, components, data structures, etc., which perform particular tasks or implement particular abstract data types. In one implementation, the modules **108** may include a back end module **112,** a front end module **114,** document management module **116,** and other module(s) **118.** The other module(s) **118** may include programs or coded instructions that supplement applications and functions of the system **100.**

The data **110,** amongst other things, serves as a repository for storing data processed, received, and generated by one or more of the modules **108,** such as project workspace data **120,** project plan data **122,** and status report data **124.** The data **110** also includes other data **126.** The other data **126** includes data generated as a result of the execution of the other module **118.**

In one implementation, the system **100** receives a request to initiate a project, such as a software development project, through its interface **104.** For example, one or more stakeholders, such as business analyst or project managers using user devices **128-1,128-2.... 128-N,** collectively referred as user devices **128,** may provide the request. Example of user devices **128** include, without limitation, desktop computers, hand-held devices, laptops or other portable computers, tablet personal computers, network computers, mobile phones, multi-media enabled phones, and smart phones.

In one example, the user devices **128** communicate with system **100** over a communication network **130** to provide the request. The communication network **130** can be implemented as a combination of the telecommunication network and a computer network. According to said example, the computer network can be implemented as one of the different types of networks, such as intranet, local area network (LAN), wide area network (WAN), and the internet. The communication network **130** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), to communicate with each other. Further, the communication network **130** may include a variety of network devices, including routers, bridges, servers, computing devices, storage devices.

The request includes details relating to the type of the project or project requirements for the project being initiated. Upon receiving said request, the back end module **112** automatically creates, a standard project workspace for storing project documents. In one implementation, the standard project workspace is created as the project workspace data **120** in the memory **106.** In another implementation, the standard project workspace for storing project documents may be created in a central repository (not shown) or a project server **132** associated with the system **100.** In one implementation, the standard project workspace can be created for every project in the project server **132.** For uniquely identifying the standard project workspace, the standard project workspace can be assigned a workspace name in a predefined format. For example, the workspace name can include the name of a project for which the standard project workspace is created. In addition, the workspace name can include date and time on which the standard project workspace is created. It will be appreciated that although a single project server **132** is depicted in the figure, the system **100** may interface with numerous project servers each hosting one or more projects.

In one example, the standard project workspace is based on the type of the project or project requirements and includes a predefined folder structure for storing various project documents, such as active project documents and artifacts documents. The active project documents are those documents which are utilized in an ongoing project, whereas the artifact documents are documents that are available upon closure of a project. Thus, the standard project workspace ensures that there is no loss of the project documents for future reference. In one implementation, the back end module **112** is further configured to ensure the security of the project documents through role based authenticated access to the standard project workspace.

In addition to creating the standard project workspace, the back end module **112** is further configured to automatically create, based on predefined rules, a standard project plan upon receiving the request for project initiation. In one implementation, the standard project plan is stored in the project plan data **122**. In various other implementations, the standard project plan may be stored in a separate database server (not shown).The standard project plan lists various activities to be performed and deliverables to be generated for each stage of the project. The standard project plan ensures that the project managers do not miss out on any of the key activities or deliverables that are required for the successful execution of the project. Thus, the repeatability of successful project execution is significantly increased, resulting in better customer satisfaction. In one implementation, the standard project plan is customizable, i.e., the standard project plan has the option of adding or modifying activities and/or deliverables that a stakeholder, such as a client or a project manager, would specifically like to include in the project.

Furthermore, the standard project plan includes tollgates for transition from a previous stage of the project to a next stage. A tollgate between the previous stage and the next stage of the project is like a checklist that includes all activities and deliverables associated with the previous stage, i.e., for taking the project from the previous stage to the next stage, all activities of the previous stage should have been performed and all the deliverables of the previous stage should have been generated, otherwise the tollgate cannot be passed or signed off. In one implementation, the activities and deliverables can be classified as mandatory and non-mandatory. Accordingly, the tollgates could be passed upon completion of mandatory activities and deliverables, and the stakeholders can take appropriate decision about non-mandatory activities and deliverables. In one implementation, the tollgates can be passed or signed off according to roles and access permissions of the stakeholders, for example, only a project manager or a client can be allowed to sign off the tollgates.

In one implementation, the front end module **114** is configured to generate, in real time, one or more status reports of the project based on the standard project plan for various stakeholders, such as project team, project managers, and leadership at delivery and client organization. All the key stakeholders, thus, have visibility to the project status on a real-time basis. In one implementation, any deviations from the standard project plan are reflected in the status reports and corrective action may be initiated by the stakeholders. The status reports ensure that all the stakeholders are updated regarding the project status. Since these status reports are directly integrated with the standard project plan and deliverable's status, they provide an insight of the status of the project on a real time basis as the project progresses. In one implementation, the interface **104** may include a reporting interface, such as a graphical user interface (GUI), configured to display the status reports to the stakeholders. In one implementation, the status reports are stored in the status report data **124**.

In one implementation, the status reports can be in the form of dashboards, charts, tables, etc. The status reports provide information, such as missed activities, heat charts, tollgate wise status of the project, alarms, pending documents, task scheduled for a given time period, and status of deliverables in each of the tollgates. In one implementation, apart from having the standard status reports, the stakeholders can customize the status reports for further analysis of any specific area of interest. In one implementation, during the tollgate review, the front end module **114** is configured to provide a status report of the project documents, such as the deliverables, completed and missed, thus, enabling the stakeholders to make informed decision on moving from one project stage to another.

In one implementation, access to status reports is based on the stakeholders, i.e., various stakeholders can view the project status at different levels of details depending upon their roles. In one example, leadership teams may get summary view of all the ongoing transitions, the project managers may get project specific details, and the clients get access to the relevant sections of the status report as applicable to them or as desired by them. In one implementation, the front end module **114** is further configured to generate the status reports of more than one project. This feature is helpful for stakeholders such as project managers, as the project managers usually manage multiple projects for various clients in different geographic locations.

In one implementation, the document management module **116** is configured to provide in-built templates for project documents. In one implementation, the document management module **116** is further configured to provide provision to upload adhoc documents, such as help documents, questionnaires for clients, and response to questionnaires. Further, the document management module **116** is configured to enable management of the project documents. For example, the document management module **116** supports internal, i.e., at delivery site, as well as external, i.e., at client site, project documents relating to sign off of the project. This ensures that no project document that is agreed with the client is missed out. Also, the document management module **116** is further configured to provide a workflow to ensure the sign-off happens on all the project documents as per quality management standards of organizations. In one implementation, the audit trail of the project review and sign-offs is maintained for future reference.

In one embodiment of the present subject matter, the system **100** can be implemented using online and/or offline technology. In the online technology, either intranet, i.e., private computer network within an organization, or internet, i.e., global network, or both can be utilized. In the internet version, the system **100** is implemented as a web server to which various stakeholders can connect online from their client devices (not shown). In the intranet version, the system **100** is implemented as an intranet server. In one implementation, the system **100** stores data in a separate database server (not shown). In the offline version, the system **100** helps various stakeholders to use the same functionality on their client devices even when the client devices are not connected to the internet and/or intranet. Accordingly, the offline version includes a synchronization functionality to update the status reports once internet and/or intranet connection is established.

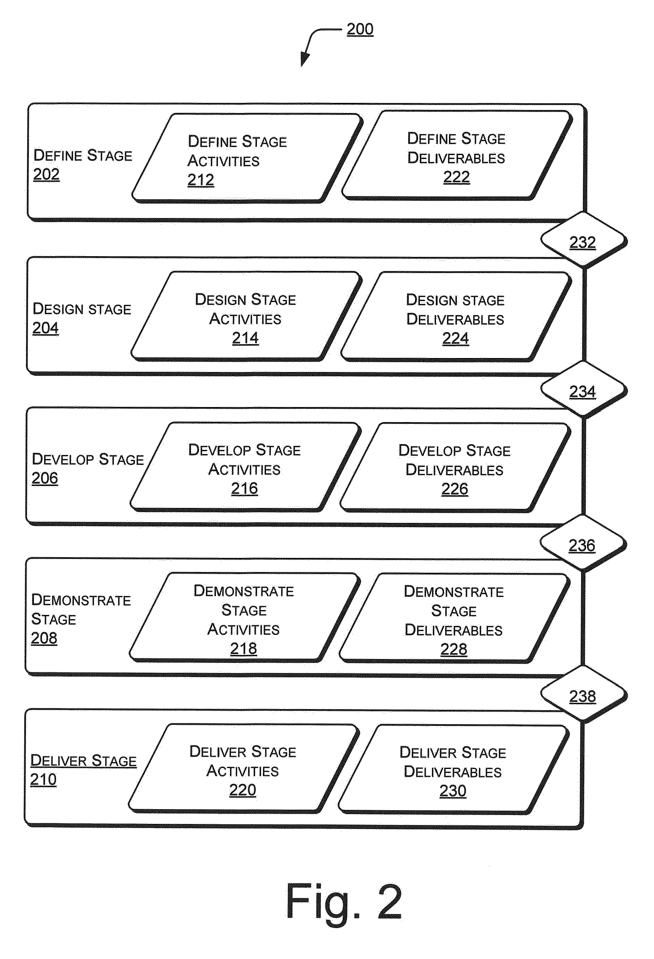

Referring now to **Fig. 2****,** a schematic project plan **200** is shown, in accordance with an embodiment of the present subject matter. The schematic project plan **200** is one example of the standard project described earlier and can be created by the system **100** in one implementation. The schematic project plan **200** defines various stages of a project. The various stages of the project include a define stage **202,** a design stage **204, a** develop stage **206,** a demonstrate stage **208,** and a deliver stage **210.** It will be understood from the foregoing description that each of these stages includes activities to be performed and deliverables to be generated in that stage of the project.

Accordingly, the define stage **202** includes define stage activities **212,** the design stage **204** includes design stage activities **214,** the develop stage **206** includes develop stage activities **216,** the demonstrate stage **208** includes demonstrate stage activities **218,** and the deliver stage **210** includes deliver stage activities **220.** Similarly, the define stage **202** includes define stage deliverables **222,** the design stage **204** includes design stage deliverables **224,** the develop stage **206** includes develop stage deliverables **226,** the demonstrate stage **208** includes demonstrate stage deliverables **228,** and the deliver stage **210** includes deliver stage deliverables, **230.**

As mentioned previously, the activities in each of the stages are considered as performed if the corresponding deliverables are generated. If all the deliverables are generated and stored, for example, in the project workspace data **120,** then the project can undergo transition from a present stage to a next stage of the project through a corresponding tollgate between the present stage and the next stage. A tollgate between the previous stage and the next stage of the project is like a checklist that includes all activities and deliverables associated with previous stage, i.e., for moving from the previous stage to the next stage of the project, all activities of the previous stage should have been performed and all the deliverables of the previous stage should have been generated, otherwise the tollgate cannot be passed. Accordingly, the schematic project plan **200** includes a define-design tollgate **232,** a design-develop tollgate **234,** a develop-demonstrate tollgate **236,** and a demonstrate-deliver tollgate **238.**

In one implementation, the activities and deliverables can be classified as mandatory and non mandatory. Accordingly, the tollgates could be passed upon completion of mandatory activities and deliverables, and the stakeholders can take appropriate decision about non-mandatory activities and deliverables. In one implementation, the schematic project plan **200** is scalable in terms of adding or modifying any number of stages, activities, deliverables, and tollgates as per business priorities of organizations

In one implementation, in the define stage **202,** project requirements comprising scope, objectives, and goals of the project are defined. The define stage activities **212** include handover from sales team to project team of the organization. Further, the define stage activities **212** may include generating a schedule for interaction with the client, sending pre due diligence questionnaires to the client, obtaining templates for project documents. In one example, the define stage activities **212** may also include preparing an expectation log, gathering existing relevant documents, getting access to supporting tools, building timelines, defining scope of the project, and reaching a mutual agreement on deliverables with the client. Additionally activities, such as confirming a statement of working, and preparing service level agreement may be completed in the define stage **202,**

Once the project requirements are agreed upon, various project matrices may be defined for the project and a unified project plan may be prepared. The project plan may include a project schedule, such as a day wise schedule for the team may be prepared. The schedule may indicate various project milestones. Further, based on the project requirements, skills and technology requirements of the project are determined and a project team may be defined. In addition, various other activities, such as building a project governance model, analyzing risks and mitigation, validating technology requirements, analyzing workload impact, performing cost benefit analysis, building log for data security, and creating process information documentation may be completed in the define stage **202**.The define phase **202** may, in one example, be concluded by making due diligence report, internal review of the define stage activities **212,** and preparing final define stage report.

As will be apparent, the define stage activities **212** result in the define stage deliverables **222.** The define deliverables **222** may include, in one example, handover documents, a schedule for interaction with client, questionnaires for client, project templates. The define deliverables **222** may also include, in one example, expectation log, existing relevant documents, team report, various project matrices, project timelines, statement of working, due diligence report, scope document, infrastructure & facility requirement document, skills and technology requirement document. In one example, the define stage **202** may be concluded by generating more define stage deliverables **222,** such as critical log sheet, requirement gathering documents, day wise schedule, project approach report, project governance model, high-level risk and mitigation plan, offshore ability analysis, data security log, workload impact analysis, project plan, transition plan, service level agreement, as-is process maps, to-be process maps, and final define stage report.

Upon completion of the define stage activities **212** and generating the define stage deliverables **222** in the define stage **202,** the define-design tollgate **232** can be signed off by an appropriate stakeholder, such a project manager, and the project can undergo transition from the define stage **202** to the design stage **204,** In one example, the define stage **202** includes a large number of the define stage activities **212** and the define stage deliverables **222.** Therefore, the define stage activities **212** and corresponding the define stage deliverables **222** can be grouped as pre-due diligence, due diligence, and solution related activities and deliverables. Accordingly, sub-tollgates can be defined between said groups. In other words, before signing off the define-design tollgate **232,** sub-tollgates within the define stage **202** can be signed off to conclude the define stage **202.**

In the design stage **204,** an initial design of the project is created. This initial design serves as the foundation on which project is to be build. In one example, the design stage activities **214** include creating a training plan, building a detailed project plan, performing IT setup, sharing detailed IT design, preparing final design stage report, etc. Accordingly, the design stage deliverables **224** include training plan, project plan, IT setup, detailed IT design, and final design stage report, etc.

Upon completion of the design stage activities **214** and generating the design stage deliverables **224** in the design stage **204,** the design-develop tollgate **234** can be signed off by an appropriate stakeholder, such a project manager, and the project can undergo transition from the design stage **204** to the develop stage **206.**

In the develop stage **206,** a first version of the project is developed. The develop stage activities **216** include assessing training, building manuals, preparing process flow, building a pilot project implementation plan, building issue escalation plan, finalizing other plans. Further, develop stage activities **216** may also include validating site readiness checklist, planning and executing IT testing, planning and executing user acceptance testing, agreement on success criteria for a pilot project, developing the project, preparing a query log, building training and induction manual, etc. In one example, the develop stage **206** may be concluded by performing the develop stage activities **216,** such as building detailed process maps, identifying opportunity for automation, and preparing final develop stage report.

Accordingly, the develop stage deliverables **226** include training assessment and certification, query log, standard operating procedure manuals, process flow maps, pilot project implementation plan, issue escalation plan, other finalized plans, site readiness checklist, IT test plan, user acceptance testing plan, pilot project success criteria document, training and induction manual. In one example, the develop stage **206** may be concluded by generating the develop stage deliverables **226,** such as building detailed process maps, identifying opportunity for automation, and preparing final develop stage report.

Upon completion of the develop stage activities **216** and generating the develop stage deliverables **226** in the develop stage **206,** the develop-demonstrate tollgate **236** can be signed off by an appropriate stakeholder, such a project manager, and the project can undergo transition from the develop stage **206** to the demonstrate stage **208.**

In the demonstrate stage **208,** the project is demonstrated to the key stakeholders for approval. The demonstrate stage activities **218** include tracking error logs, revalidating effort estimation, revalidating service level agreement, reviewing risk management, preparing contingency plan for not meeting metrics, preparing various requirement documents, preparing pilot project success report, obtaining transition documents, preparing final demonstrate stage report, etc. The demonstrate stage activities **218** further include gathering requirements for internal as well as external project management in the demonstrate stage.

Accordingly, the demonstrate stage deliverables **228** include error log, effort estimation revalidation, service level agreement revalidation, risk management review, contingency plan for metrics not meeting, various requirements defining documents, pilot project success report, transition documents, final demonstrate stage report, etc.

Upon completion of the demonstrate stage activities **218** and generating the demonstrate stage deliverables **228** in the demonstrate stage **208,** the demonstrate-deliver tollgate **238** can be signed off by an appropriate stakeholder, such a client, and the project can undergo transition from the demonstrate stage **208** to the deliver stage **210,**

In the deliver stage **210,** the project is delivered to the client. The deliver stage activities **220** include performing process risk review, sharing transition case study and best practices, handing over, service delivery, etc. Accordingly, the deliver stage deliverables **230** include process risk review report, transition case study and best practices, handing over documents, service delivery documents, etc.

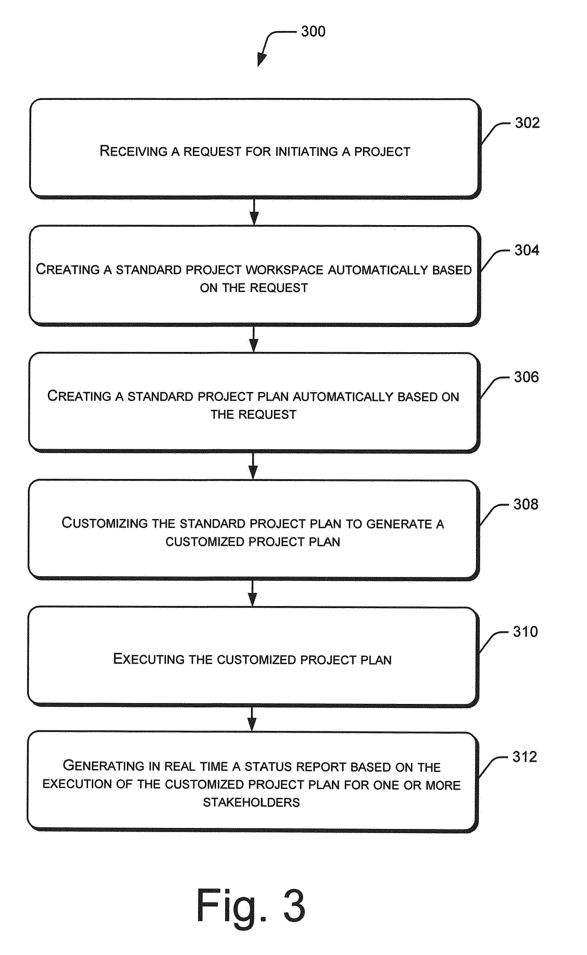

Referring now to **Fig. 3****,** a method **300** for managing a project during transitions is shown, in accordance with an embodiment of the present subject matter. The method **300** may be described in the general context of computer executable instructions. Generally, computer executable instructions can include routines, programs, objects, components, data structures, procedures, modules, functions, etc., that perform particular functions or implement particular abstract data types. The method **300** may also be practiced in a distributed computing environment where functions are performed by remote processing devices that are linked through a communications network. In a distributed computing environment, computer executable instructions may be located in both local and remote computer storage media, including memory storage devices.

The order in which the method **300** is described is not intended to be construed as a limitation, and any number of the described method blocks can be combined in any order to implement the method **300** or alternate methods. Additionally, individual blocks may be deleted from the method **300** without departing from the spirit and scope of the subject matter described herein. Furthermore, the method can be implemented in any suitable hardware, software, firmware, or combination thereof. However, for ease of explanation, in the embodiments described below, the method **300** may be considered to be implemented in the above described system **100.**

At block **302,** a request for initiating a project is received. In one example, the system **100** receives the request for initiating the project through the interface **104.** In one example, the request includes specifying a type of the project and/or project requirements.

At block **304,** a standard project workspace is automatically created based on the request. Upon receiving the request to initiate the project the standard project workspace is created for storing project documents based on the type of the project and/or the requirements specified in the request. The standard project workspace includes a predefined folder structure for storing the project documents. In one example, the back end module **112** creates the standard project workspace.

At block **306,** a standard project plan is automatically created based on the request to initiate the project. As explained previously, the standard project plan lists the various activities and deliverables for completing a project. Also, the standard project plan defines tollgates to take the project from a previous stage to a next stage. In one implementation, the standard project plan is based on an in-built template, such as the schematic project plan **200.** In one implementation, the back end module **112** creates the standard project plan.

At block **308** the standard project plan is customized to generate a customized project plan. In one implementation, the standard project plan is customized by adding or modifying activities and/or deliverables and/or tollgates that a stakeholder, such as a client or a project manager, would specifically like to include in the project.

At block **310** the customized project plan is executed. Once the customized project plan is created, a project team starts completing the project in stages by performing the activities and generating deliverables for each stage as per the customized project plan. As described earlier, a tollgate is signed off after completion of each stage. In one implementation, only selected stakeholders, such as project managers, can sign off the tollgate. In one example, the stakeholder, such as a client, who is responsible for signing off a tollgate after a define stage may signoff the tollgate once the define stage is completed. In one implementation, when the standard plan is not customized, the standard plan may be executed in place of the customized project plan.

At block **312,** a status report based on the execution of customized project plan for one or more stakeholders is generated in real time. Anytime during the project execution duration, various stakeholders, such as project manager, management at delivery and client site, can be presented a current status of the project in form of status reports with appropriate details as per the role of the stakeholders. These status reports are based on the customized project plan. Accordingly, the activities and deliverables mentioned in the standard project plan are tracked for their completion and timelines. The status report ensures that the stakeholders do not miss any activity or deliverables promised to client or necessary for successful completion of the project. In one example, the front end module **114** is configured to generate the status report.

Although implementations for methods and systems for managing a project during transition have been described in language specific to structural features and/or methods, it is to be understood that the appended claims are not necessarily limited to the specific features or methods described. Rather, the specific features and methods are disclosed as examples of implementations for managing the project of during transition.

## Claims

1. A system (**100**) for managing a project during transition, the system **(100)** comprising:
a processor **(102);**
an interface (**104**) to receive a request to initiate the project; and
a memory (**106**) coupled to the processor **(102),** the memory comprises:
a back end module **(112)** configured to automatically create, upon receiving the request to initiate the project, a standard project workspace for storing project documents and a standard project plan listing a plurality of predefined activities and a plurality of predefined deliverables for each of a plurality of stages of the project, wherein the standard project plan defines at least one tollgate for transition from one stage of the project to another stage; and
a front end module (**114**) configured to generate in real time a plurality of status reports of the project for a plurality of stakeholders, wherein the plurality of status reports of the project are based on the standard project plan.

2. The system **(100)** as claimed in claim 1, the system **(100)** further comprises a document management module **(116)** configured to: manage the project documents; provide workflow for the project documents; provide in-built templates for creating the project documents, wherein the in-built templates are customizable by one or more of the plurality of stakeholders.

3. The system **(100)** as claimed in claim 1, wherein the plurality of status reports is selected from a group consisting of dashboard, heat charts, alarms, reports, and pending documents.

4. The system **(100)** as claimed in claim 1, wherein the standard project workspace comprises a predefined folder structure for storing active project documents and artifacts documents.

5. The system **(100)** as claimed in claim 1, wherein the plurality of status reports is defined according to roles of the plurality of stakeholders.

6. A method for managing a project during transition, the method comprising:
receiving a request to initiate a project;
creating, automatically, based on the request, a standard project workspace for storing project documents and a standard project plan listing a plurality of redefined activities and a plurality of predefined deliverables for each of a plurality of stages of the project, wherein the standard project plan defines at least one tollgate for transition from a previous stage of the project to a next stage of the project; and
generating in real time a plurality of status reports of the project for a plurality of stakeholders, wherein the plurality of status reports of the project are based on the standard project plan generating in real time a status report of the project.

7. The method as claimed in claim 6, the method further comprising customizing the standard project plan to generate a customized project plan.

8. The method as claimed in claim 6, wherein the tollgate includes one or more activities from the plurality of predefined activates and one or more deliverables from the plurality of predefined deliverables, wherein the tollgate is signed-off by one of the plurality of stakeholders.

9. The method as claimed in claim 6, the plurality of stages of the project comprises a define stage, a design stage, a develop stage, a demonstrate stage, and deliver stage.

10. The method as claimed in claim 7, wherein the plurality of predefined activities in the define stage are selected from a group consisting of sending a pre-due diligence questionnaire to a client, gathering skill set and technology requirements, building a data security risk log, initiating a unified project plan.

11. The method as claimed in claim 7, wherein the plurality of predefined activities comprises creating a training plan in the design stage.

12. The method as claimed in claim 7, wherein the plurality of predefined activities comprises agreeing on a success criteria for a pilot project in the develop stage.

13. The method as claimed in claim 7, wherein the plurality of predefined activities comprises gathering requirements for project management in the demonstrate stage.

14. The method as claimed in claim 7, wherein the plurality of predefined activities comprises performing a process risk review in the deliver stage.

15. A computer readable medium having embodied thereon a computer program for executing a method for managing a project during transition, the method comprising:
receiving a request to initiate a project;
creating, automatically based on the request, a standard project workspace for storing project documents and a standard project plan listing a plurality of predefined activities and a plurality of predefined deliverables for each of a plurality of stages of the project, wherein the standard project plan defines at least one tollgate for transition from a previous stage of the project to a next stage of the project; and
generating in real time a plurality of status reports of the project for a plurality of stakeholders, wherein the plurality of status reports of the project are based on the standard project plan generating in real time a status report of the project.
